# FASCICULE DE BREVET EUROPEEN

(11) **EP 1 248 751 B1**
(45) Date de publication et mention de la délivrance du brevet: **28.04.2004**
(21) Numéro de dépôt: 00983376.5
(22) Date de dépôt: 16.11.2000
(51) Int. Cl.: C04B 28/08, C04B 7/14, C04B 14/48

(54) **COMPOSITION DE BETON MICROGRANULAIRE A BASE DE CIMENT AU LAITIER**
Mikrogranuläre Betonzusammensetzung auf BASIS VON Schlackenzement
MICROGRANULAR CONCRETE COMPOSITION BASED ON SLAG CEMENT

(30) Priorité: 16.11.1999 FR 9914340
(43) Date de publication de la demande: 16.10.2002
(73) Titulaire: S.A. Ciments d'Obourg, 7034 Obourg (BE)
(72) Inventeur: AITCIN, Pierre-Claude, Sherbrooke, Québec J1J 1M8 (CA); LERAT, André, B-7000 MONS (BE); WEISS, Jean-Claude, F-59880 St-Saulve (FR)
(74) Mandataire: Fruchard, Guy
(86) Numéro de dépôt international: PCT/FR2000/003184
(87) Numéro de publication internationale: WO 2001/036345

(56) Documents cités:
- EP-A- 0 032 421
- EP-A- 0 263 723
- EP-A- 0 521 376
- EP-A- 0 534 857
- EP-A- 0 696 558
- EP-A- 0 934 915
- WO-A-94/09252
- WO-A-95/01316
- DE-A- 3 739 997
- CHEMICAL ABSTRACTS, vol. 104, no. 26, 30 juin 1986 (1986-06-30) Columbus, Ohio, US; abstract no. 229566c, K. SETO, ET AL.: page 298; XP002143022 & JP 60 191074 A (ID.) 28 septembre 1985 (1985-09-28)
- LANGE F ET AL: "EINFLUSS VON FEINSTZEMENTZUSATZEN AUF DAS FESTIGKEITSVERHALTEN VON MORTELN THE EFFECT OF ADDITIONS OF ULTRA-FINE CEMENT ON THE STRENGTH CHARACTERISTICS OF MOTARS INFLUENCE D'ADDITIONS DE CIMENT ULTRAFIN SUR LA RESISTANCE DES MORTIERS EL INFLUJO DE LOS ADITIOVOS DE CEMENTO FINISIMO SOBRE EL COMPORTAM" ZKG INTERNATIONAL,DE,BAUVERLAG GMBH. WIESBADEN, vol. 48, no. 12, 1 décembre 1995 (1995-12-01), pages 661-666, XP000555648 ISSN: 0949-0205

## Description

La présente invention concerne une composition de béton microgranulaire à base de ciment au laitier permettant de réaliser de façon préfabriquée ou in situ des éléments de construction ayant des performances mécaniques très élevées en ce qui concerne la résistance à la traction par flexion, la compression et l'énergie de fracturation, c'est-à-dire des bétons ayant une résistance finale à la compression d'au moins 120 MPa et une énergie de fracturation de plusieurs milliers de joules par mètre carré.

Des compositions de ce type ont été proposées en utilisant du ciment Portland et du sable de quartz. La fabrication du ciment Portland présente l'inconvénient de produire un très grand volume de gaz carbonique en raison de la forte proportion.de clinker dans le ciment Portland. En outre, le sable de quartz est partiellement inerte lorsque la composition est mise en oeuvre de sorte que pour obtenir la résistance recherchée du béton après solidification il est nécessaire de prévoir une quantité importante de ciment par rapport à le quantité de sable.

Selon l'invention on propose une composition de béton microgranulaire à base d'un ciment au laitier, comportant pour 100 parties en poids (p) de ciment au laitier :
- 15 p à 50 p, de micro-éléments à caractère pouzzolanique ayant une dimension de grains comprise entre 0,1 et 1 µm, de préférence entre 0,1 et 0,5 µm,
- 10 p à 50 p de micro-éléments à caractère hydraulique ayant un D50 compris entre 2 et 10 µm, et une dimension maximale des grains de 40 um, de préférence 30 µm,
- 90 p à 210 p de sable ayant un D50 compris entre 100 et 500 µm, et une dimension maximale des grains au plus égale à 1000 µm,
- 10 p à 40 p, de préférence 20 p, d'eau et
- 0,5 à 5 p (extrait sec) d'agent dispersant ou fluidifiant,
du laitier étant présent selon une proportion de 50 à 90 % en poids de l'ensemble des composants autres que l'eau.

Selon une version avantageuse de l'invention, la composition comporte en outre 1 p à 80 p, de préférence 10 p à 30 p, de fibres métalliques de l'un, de l'autre ou des deux groupes suivants : un premier groupe de fibres de longueur comprise entre 20 et 100 mm et de diamètre compris entre 100 et 500 µm et un second groupe de fibres de longueur comprise entre 1 et 20 mm et de diamètre compris entre 100 et 300 µm.

Selon le mode de réalisation préféré de l'invention, la composition est réalisée à partir d'un ciment au laitier, c'est-à-dire un ciment comprenant de 20 à 80 % de laitier broyé, de préférence 60 % de laitier broyé, le reste étant du clinker et/ou des activateurs de laitier tels que des composés alcalins, calciques ou organiques, ce ciment au laitier ayant un D50 de 8 µm. Pour 100 parties en poids (p) de ciment au laitier, la composition préférée comporte 30 p de micro-éléments à caractère pouzzolanique ayant une dimension de grains comprise entre 0,1 µm et 0,5 µm. Ces micro-éléments peuvent être des micro-cendres résultant de la récupération des fines dans des éléctrofiltres de centrale thermique, des cendres volantes micronisées, des silices d'origine géothermales ou des fumées de silice ou un mélange de ceux-ci. Les micro-éléments comprennent en outre 30 p de micro-éléments à caractère hydraulique tels que du microlaitier ayant un D 50 de 10 µm et une dimension maximale des grains de 30 µm. La composition préférée comporte en outre 150 p de sable comprenant au moins 60 p de sable de laitier à structure vitreuse ou cristalline, le reste étant du sable de quartz, ce sable ayant un D50 de 250 µm et une dimension maximale des grains de 600 µm. Afin d'augmenter la résistance à la traction du béton tout en permettant un malaxage rapide on prévoit en outre d'incorporer 20 p de fibres métalliques obtenues par tréfilage d'un acier pour réaliser des fils de 160 µm de diamètre qui sont découpés selon des segments ayant une longueur de 28 mm. Si nécessaire la composition comporte encore 1 p à 15 p de fibres organiques qui améliorent la tenue au feu du béton.

Lors du malaxage du béton, par exemple dans un malaxeur à cuve déformable, 10 p à 40 p, de préférence 20 p, d'eau sont ajoutées, une partie de cette eau ayant servi à diluer 2 p de fluidifiant sous forme d'extrait sec tel que par exemple un polynaphtalène sulfonate ou tout autre fluidifiant approprié.

Pour tenir compte de la contraction volumétrique des hydrates produits, le béton obtenu peut être pressé pour minimiser la porosité interne et soumis à un traitement thermique accélérant la prise et le durcissement du béton. On notera à ce propos que la composition selon l'invention permet une montée en température plus rapide que les compositions au ciment Portland.

Bien entendu, l'invention n'est pas limitée au mode de réalisation particulier décrit et est susceptible de variantes de réalisation qui apparaîtront à l'homme de métier sans sortir du cadre de l'invention tel que défini par les revendications.

En particulier, bien que dans le mode de réalisation préféré décrit le ciment au laitier ait été mentionné avec un D50 de 8 µm, des propriétés satisfaisantes du béton sont obtenues avec un ciment au laitier ayant un D50 compris entre 5 et 30 µm.

De même, sans sortir du cadre de l'invention, les micro-éléments à caractère pouzzolanique peuvent avoir une dimension de grains comprise entre 0,1 et 1 µm et peuvent être inclus dans la composition selon une quantité de 20 p à 40 p voire même de 15 p à 50 p. Les micro-éléments à caractère hydraulique peuvent avoir un D50 compris entre 2 et 10 µm et une dimension maximale de grains de 40 µm, et peuvent également être inclus selon une quantité de 20 p à 40 p voire même 10 p à 50 p. On peut également prévoir dans la composition 90 p à 210 p de sable ayant un D50 compris entre 200 et 300 µm, voire même entre 100 et 500 µm, et une dimension maximale des grains allant jusqu'à 1000 µm. A ce propos on notera qu'une composition dont le sable est totalement du sable de laitier présente l'avantage d'avoir une grande résistance à la traction/compression et d'une fragilité relativement faible. Toutefois, comme dans le mode de réalisation particulier décrit, on peut remplacer en partie le sable de laitier par du sable de quartz. A ce propos on notera que selon l'invention les composants autres que l'eau sont du laitier dans une proportion de 50 à 90 % en poids de ces composants. Si la teneur en laitier du ciment est augmentée il est donc possible de diminuer la teneur en laitier du sable et vice versa.

Par ailleurs on sait que les fibres ont pour fonction de modifier la distribution du champ des forces aux endroits où l'ouvrage réalisé en béton présente des amorces de fissure. En fonction de la configuration de l'ouvrage et des efforts auxquels celui-ci sera soumis, il sera donc possible de faire varier la nature, la quantité ou les dimensions des fibres utilisées, par exemple inclure 1 p à 80 p de fibres métalliques, celles-ci provenant de préférence à raison d'au moins 15 % en volume d'un premier groupe de fibres de longueur comprise entre 20 et 40 mm, voire entre 20 et 100 mm et un diamètre compris entre 200 et 300 µm, voire même entre 100 et 500 µm, et provenant pour le reste d'un second groupe de fibres de longueur comprise entre 1 et 20 mm et un diamètre compris entre 100 et 300 µm, la quantité totale de fibres métalliques étant telle que pour une coupe du béton solidifié selon une direction quelconque, le nombre moyen de fibres coupées est inférieur ou au plus égal à une fibre par millimètre carré. A ce propos on notera que pour des fibres de diamètre donné le volume total des fibres doit être d'autant plus faible que celles-ci sont plus longues.

On pourra également prévoir d'autres adjuvants, la quantité totale d'adjuvants étant de préférence comprise entre 0,5 p à 5 p (extrait sec).

## Revendications

1. Composition de béton microgranulaire, c'est-à-dire dont tous les composants ont une dimension de grains au plus égale à 1 mm, cette composition étant à base d'un ciment au laitier, **caractérisée en ce que** cette composition comporte pour 100 parties en poids (p) de ciment au laitier:
- 15 p à 50 p, de micro-éléments à caractère pouzzolanique ayant une dimension de grains comprise entre 0,1 et 1 µm, de préférence entre 0,1 et 0,5 µm,
- 10 p à 50 p de micro-éléments à caractère hydraulique ayant un D50 compris entre 2 et 10 µm, et une dimension maximale des grains de 40 µm, de préférence 30 µm,
- 90 p à 210 p de sable ayant un D50 compris entre 100 et 500 µm, et une dimension maximale des grains au plus égale à 1000 µm,
- 10 p à 40 p, de préférence 20 p, d'eau et
- 0,5 à 5 p (extrait sec) d'agent dispersant ou fluidifiant,
du laitier étant présent selon une proportion de 50 à 90 % en poids de l'ensemble des composants autres que l'eau.

2. Composition selon la revendication 1, **caractérisée en ce qu'**elle comporte en outre 1 p à 80 p, de préférence 10 p à 30 p, de fibres métalliques de l'un, de l'autre ou des deux groupes suivants : un premier groupe de fibres de longueur comprise entre 20 et 100 mm et de diamètre compris entre 100 et 500 µm et un second groupe de fibres de longueur comprise entre 1 et 20 mm et de diamètre compris entre 100 et 300 µm.

3. Composition selon la revendication 2, **caractérisée en ce qu'**au moins 15 % en volume des fibres proviennent du premier groupe.

4. Composition selon la revendication 2 ou la revendication 3, **caractérisée en ce que** des fibres du premier groupe ont une longueur comprise entre 20 et 40 mm.

5. Composition selon l'une quelconque des revendications 2 à 4, **caractérisée en ce que** la quantité totale de fibres métalliques est telle que pour une coupe du béton solidifié selon une direction quelconque, le nombre moyen de fibres coupées est inférieur ou au plus égal à une fibre par millimètre carré.

6. Composition selon l'une quelconque des revendications précédentes, **caractérisée en ce qu'**elle comporte en outre 1 p à 15 p de fibres organiques.

7. Composition selon l'une quelconque des revendications précédentes, **caractérisée en ce qu'**elle comporte 20 p à 40 p, de préférence 30 p, de micro-éléments à caractère pouzzolanique et 20 p à 40 p, de préférence 30 p de micro-éléments à caractère hydraulique.

8. Composition selon l'une quelconque des revendications précédentes, **caractérisée en ce qu'**elle comporte entre 130 p à 170 p, de préférence 150 p de sable.

9. Composition selon l'une quelconque des revendications précédentes, **caractérisée en ce que** le sable a un D50 compris entre 200 et 300 µm, de préférence 250 µm et une dimension maximale des grains au plus égale à 600 µm.

## Claims

1. A microgranular concrete composition, i.e. a composition in which all of the constituents are of grain size no greater than 1 mm, the composition being based on slag cement, the composition being **characterized in that**, for 100 parts by weight (p) of the slag cement, it comprises:
- 15 p to 50 p of micro-elements of pouzzolanic nature of grain size lying in the range 0.1 µm and 1 µm, and preferably in the range 0.1 µm to 0.5 µm;
- 10 p to 50 p of micro-elements of hydraulic nature having a D50 lying in the range 2 µm to 10 µm, and a maximum grain dimension of 40 µm, and preferably of 30 µm;
- 90 p to 210 p of sand having a D50 lying in the range 100 µm to 500 µm, with a maximum grain dimension no greater than 1000 µm;
- 10 p to 40 p, and preferably 20 p of water; and
- 0.5 p to 5 p (dry extract) of a dispersing or fluidizing agent,
the slag being present at a proportion of 50% to 90% by weight of all of said constituents other than water.

2. A composition according to claim 1, **characterized in that** it further comprises 1 p to 80 p, and preferably 10 p to 30 p metal fibers taken from one or the other or both of the following two groups: a first group of fibers of length lying in the range 20 mm to 100 mm and of diameter lying in the range 100 µm to 500 µm, and a second group of fibers of length lying in the range 1 mm to 20 mm and of diameter lying in the range 100 µm to 300 µm.

3. A composition according to claim 2, **characterized in that** at least 15% by volume of the fibers come from the first group.

4. A composition according to claim 2 or claim 3, **characterized in that** the fibers of the first group are of a length lying in the range 20 mm to 40 mm.

5. A composition according to any one of claims 2 to 4, **characterized in that** the total quantity of metal fibers is such that, for a section through the solidified concrete in any direction, the mean number of cut fibers is no greater than one fiber per square millimeter.

6. A composition according to any preceding claim, **characterized in that** it further comprises 1 p to 15 p of organic fibers.

7. A composition according to any preceding claim, **characterized in that** it comprises 20 p to 40 p and preferably 30 p of micro-elements of pouzzolanic nature and 20 p to 40 p, preferably 30 p of micro-elements of hydraulic nature.

8. A composition according to any preceding claim, **characterized in that** it has 130 p to 170 p and preferably 150 p of sand.

9. A composition according to any preceding claim, **characterized in that** the sand has a D50 lying in the range 200 µm to 300 µm, and preferably equal to 250 µm, and a maximum grain dimension no greater than 600 µm.

## Patentansprüche

1. Mikrogranulare Betonzusammensetzung, d.h. alle Bestandteile derselben haben eine Korngröße von höchstens gleich 1 mm, wobei diese Zusammensetzung auf Schlackenzement basiert, **dadurch gekennzeichnet, dass** diese Zusammensetzung für 100 Gewichtsteile (p) Schlackenzement umfasst:
- 15 p bis 50 p Mikroelemente puzzolanischer Art mit einer Korngröße zwischen 0,1 und 1 µm, vorzugsweise zwischen 0,1 und 0,5 µm,
- 10 p bis 50 p Mikroelemente hydraulischer Art mit einem D50 zwischen 2 und 10 µm und einer maximalen Korngröße von 40 µm, vorzugsweise von 30 µm,
- 90 p bis 210 p Sand mit einem D50 zwischen 100 und 500 µm und einer maximalen Korngröße von höchstens gleich 1000 µm,
- 10 p bis 40 p, vorzugsweise 20 p Wasser und
- 0,5 bis 5 p (Trockenextrakt) Dispersionsmittel oder Verflüssiger,
wobei die Schlacke entsprechend einem Anteil von 50 bis 90 Gew.-% aller Bestandteile außer Wasser vorhanden ist.

2. Zusammensetzung nach Anspruch 1, **dadurch gekennzeichnet, dass** sie ferner 1 p bis 80 p, vorzugsweise 10 p bis 30 p Metallfasern der einen, der anderen oder beider folgenden Gruppen enthält: eine erste Gruppe von Fasern mit einer Länge zwischen 20 und 100 mm und einem Durchmesser zwischen 100 und 500 µm und einer zweiten Fasergruppe mit einer Faserlänge zwischen 1 und 20 mm und einem Durchmesser zwischen 100 und 300 µm.

3. Zusammensetzung nach Anspruch 2, **dadurch gekennzeichnet, dass** mindestens 15 Volumen-% der Fasern aus der ersten Gruppe stammen.

4. Zusammensetzung nach Anspruch 2 oder Anspruch 3, **dadurch gekennzeichnet, dass** die Fasern der ersten Gruppe eine Länge zwischen 20 und 40 mm haben.

5. Zusammensetzung nach einem der Ansprüche 2 bis 4, **dadurch gekennzeichnet, dass** die Gesamtmenge der Metallfasern derart ist, dass für einen Schnitt des verfestigten Betons in einer beliebigen Richtung die durchschnittliche Anzahl der durchschnittenen Fasern niedriger oder höchstens gleich einer Faser pro Quadratmillimeter ist.

6. Zusammensetzung nach einem der vorhergehenden Ansprüche, **dadurch gekennzeichnet, dass** sie ferner 1 p bis 15 p organische Fasern enthält.

7. Zusammensetzung nach einem der vorhergehenden Ansprüche, **dadurch gekennzeichnet, dass** sie 20 p bis 40 p, vorzugsweise 30 p Mikroelemente puzzolanischer Art und 20 p bis 40 p, vorzugsweise 30 p Mikroelemente hydraulischer Art enthält.

8. Zusammensetzung nach einem der vorhergehenden Ansprüche, **dadurch gekennzeichnet, dass** sie zwischen 130 p und 170 p, vorzugsweise 150 p Sand enthält.

9. Zusammensetzung nach einem der vorhergehenden Ansprüche, **dadurch gekennzeichnet, dass** der Sand einen D50 zwischen 200 und 300 µm, vorzugsweise von 250 µm und eine maximale Korngröße von höchstens gleich 600 µm hat.
